# FASCICULE DE BREVET EUROPEEN

(11) **EP 2 961 643 B1**
(45) Date de publication et mention de la délivrance du brevet: **09.09.2020**
(21) Numéro de dépôt: 14707157.5
(22) Date de dépôt: 27.02.2014
(51) Int. Cl.: B60S 1/48

(54) **DISPOSITIF DE DISTRIBUTION DE LIQUIDE LAVE-GLACE POUR BALAIS D'ESSUIE-GLACE DE VEHICULE AUTOMOBILE**
REINIGUNGSFLÜSSIGKEITSABGABEVORRICHTUNG FÜR FAHRZEUGSCHEIBENWISCHER
WASHING LIQUID DISPENSING APPARATUS FOR VEHICLE WINDSCREEN WIPERS

(30) Priorité: 28.02.2013 FR 1351757
(43) Date de publication de la demande: 06.01.2016
(73) Titulaire: Valeo Systèmes d'Essuyage, 78322 Le Mesnil Saint Denis (FR)
(72) Inventeur: IZABEL, Vincent, F-91380 Chilly Mazarin (FR); CAILLOT, Gérald, F-78720 Cernay La Ville (FR); JARASSON, Jean-Michel, F-78321 Le Mesnil Saint Denis (FR)
(74) Mandataire: Valeo Vision
(86) Numéro de dépôt international: PCT/EP2014/053884
(87) Numéro de publication internationale: WO 2014/131859

(56) Documents cités:
- DE-A1-102008 051 584
- DE-A1-102012 100 880
- FR-A1- 2 297 155
- FR-A1- 2 950 844
- FR-A1- 2 967 955

## Description

La présente invention est relative à un dispositif de distribution de liquide lave-glace pour balais d'essuie-glace de véhicule automobile.

Le balai d'essuie-glace comporte une ou deux rampes d'arrosage pourvues d'un ou d'une multitude de gicleurs ou orifices d'arrosage sous pression, permettant la distribution du liquide lave-glace sur la surface vitrée du véhicule. Les gicleurs sont alimentés en liquide lave-glace contenu dans un réservoir par l'intermédiaire d'une pompe.

Le dispositif de distribution comporte généralement une conduite hydraulique principale raccordée à une pompe de liquide lave-glace du véhicule automobile et deux conduites hydrauliques secondaires raccordées aux balais d'essuie-glace. La conduite hydraulique principale et les conduites hydrauliques secondaires comportent respectivement un manchon présentant au moins un canal de circulation pour la circulation du liquide lave-glace. Les conduites hydrauliques principale et secondaires sont raccordées entre elles par un raccord de dérivation permettant notamment de détacher les conduites hydrauliques secondaires reliées aux balais d'essuie-glace pour les remplacer.

Dans certains dispositifs de distribution, le raccord de dérivation est constitué par un clapet anti-retour pour éviter toute redescente de liquide des balais d'essuie-glace vers la pompe. Un tel raccord présente l'inconvénient d'être volumineux.

Le document FR 2 950 844 A1 montre un dispositif de distribution de liquide lave-glace selon le préambule de la première revendication.

Un des buts de la présente invention est de proposer un dispositif de distribution de liquide lave-glace pour balais d'essuie-glace de véhicule automobile amélioré par un dispositif simplifié et plus compact.

A cet effet, la présente invention a pour objet un dispositif de distribution de liquide lave-glace pour balais d'essuie-glace de véhicule automobile comportant :
- une conduite hydraulique présentant au moins un canal de circulation de liquide,
- au moins un raccord hydraulique assurant l'acheminement de liquide à la conduite ou l'évacuation du liquide de la conduite,

au moins un clapet anti-retour, le dispositif de distribution étant caractérisé en ce que l'au moins un clapet anti-retour est:
- inséré dans une canule d'un adaptateur, ladite canule étant insérée dans un canal de circulation de la conduite hydraulique secondaire, ledit adaptateur formant un raccord hydraulique pour le raccordement d'au moins un raccord de dérivation avec un canal de circulation d'une conduite hydraulique secondaire, ou
- inséré à l'entrée d'une canule d'un raccord mâle, ladite entrée de canule étant insérée dans un canal de circulation de la conduite hydraulique secondaire, le raccord mâle formant un raccord hydraulique pour le raccordement d'un balai d'essuie glace avec au moins un canal de circulation d'une conduite hydraulique secondaire.

Le raccordement hydraulique est ainsi simplifié et rendu plus compact.

Plus particulièrement, le dispositif de distribution peut comporter :
- une conduite hydraulique principale présentant au moins un canal de circulation,
- deux conduites hydrauliques secondaires présentant respectivement au moins un canal de circulation, et
- au moins un raccord hydraulique pour raccorder les canaux de circulation des conduites hydrauliques.

De façon préférentielle, la conduite hydraulique principale est raccordée à une pompe de liquide lave-glace du véhicule automobile, et les conduites hydrauliques secondaires sont raccordées à un balai d'essuie-glace respectif.

Selon l'invention, le clapet anti-retour est au moins partiellement reçu dans une canule du raccord hydraulique, ladite canule étant reçue dans un canal de circulation.

Selon la première alternative, le clapet anti-retour est inséré dans une canule d'un adaptateur, ladite canule étant insérée dans un canal de circulation de la conduite hydraulique secondaire, ledit adaptateur formant un raccord hydraulique pour le raccordement d'au moins un raccord de dérivation avec un canal de circulation d'une conduite hydraulique secondaire. Etant donné qu'un clapet anti-retour est reçu dans les canules de l'adaptateur de chaque conduite hydraulique secondaire, on est assuré que le liquide lave-glace ne remonte pas d'une conduite hydraulique secondaire à l'autre.

Selon la deuxième alternative, le clapet anti-retour est inséré à l'entrée d'une canule d'un raccord mâle, ladite entrée de canule étant insérée dans un canal de circulation de la conduite hydraulique secondaire, le raccord mâle formant un raccord hydraulique pour le raccordement d'un balai d'essuie-glace avec au moins un canal de circulation d'une conduite hydraulique secondaire. Etant donné qu'un clapet anti-retour est reçu dans le canal de circulation de chaque conduite hydraulique secondaire, on est assuré que le liquide lave-glace ne remonte pas d'une conduite hydraulique secondaire à l'autre. De plus, les clapets anti-retour sont montés près des balais d'essuie-glace. Les canaux de circulation des conduites hydrauliques secondaires comportant du liquide lave-glace jusqu'aux clapets anti-retour, sont donc remplis de liquide lave-glace au plus proche des balais d'essuie-glace. Il en résulte un gain de temps pour la projection du liquide lave-glace sur le parebrise du véhicule automobile.

Le dispositif de distribution peut comporter un organe de blocage coopérant avec le canal de circulation et le clapet anti-retour pour bloquer le déplacement du clapet anti-retour dans le canal de circulation.

Le clapet anti-retour est par exemple de type « bec de canard ». Ce type de clapet anti-retour présente l'avantage d'être simple, robuste, facile à agencer et à réchauffer.

Le clapet anti-retour est par exemple monté en force dans le canal de circulation ou dans une canule du raccord hydraulique.

Selon un mode de réalisation, la conduite hydraulique principale et/ou les conduites hydrauliques secondaires comportent des conducteurs chauffants. En fonctionnement, les conducteurs chauffants chauffent le manchon et donc les canaux de circulation qui réchauffent les clapets anti-retour sans qu'il y ait besoin de dispositif de chauffage supplémentaire. De la même manière, le manchon chauffe à son tour la canule du raccord hydraulique insérée dans le canal de circulation. Les clapets anti-retour qui y sont insérés sont alors réchauffés par le raccord hydraulique. Les clapets anti-retour insérés directement dans les canaux de circulation ou dans les canules des raccords hydrauliques, bénéficient ainsi de la proximité des conducteurs chauffants pour être réchauffés.

Selon un mode de réalisation, les conduites hydrauliques principale et secondaires comportent respectivement deux canaux de circulation de liquide. Les conducteurs chauffants s'étendent par exemple dans le manchon de la conduite hydraulique principale ou secondaire en passant entre les deux canaux de circulation.

D'autres objets, caractéristiques et avantages de l'invention ressortiront de la description suivante, donnée à titre d'exemple, sans caractère limitatif, en regard des dessins annexés sur lesquels :
- la figure 1 représente une vue schématique d'éléments d'un dispositif de distribution de liquide lave-glace pour balai d'essuie-glace de véhicule automobile,
- la figure 2 représente un exemple de conduite hydraulique principale pour un dispositif de distribution dit « chauffant » et « mono-rampe »,
- la figure 3 représente une vue schématique d'éléments à l'état désassemblé d'un dispositif de distribution de liquide lave-glace selon un premier mode de réalisation,
- la figure 4 représente une vue en coupe d'un détail d'un dispositif de distribution de liquide lave-glace similaire à celui de la figure 3 à l'état assemblé,
- la figure 5 représente une vue schématique d'éléments à l'état désassemblé d'un dispositif de distribution de liquide lave-glace pour balai d'essuie-glace de véhicule automobile,
- la figure 6 représente une vue en coupe d'un détail d'un dispositif de distribution de liquide lave-glace similaire à celui de la figure 5 à l'état assemblé,
- la figure 7 montre une vue en coupe d'un exemple d'un clapet anti-retour et d'un organe de blocage assemblés,
- la figure 8 représente une vue schématique d'éléments à l'état désassemblé d'un dispositif de distribution de liquide lave-glace pour balai d'essuie-glace de véhicule automobile selon un troisième mode de réalisation, et
- la figure 9 représente une vue schématique d'éléments à l'état désassemblé d'un dispositif de distribution de liquide lave-glace pour balai d'essuie-glace de véhicule automobile selon un quatrième mode de réalisation.

Sur ces figures, les éléments identiques portent les mêmes numéros de référence.

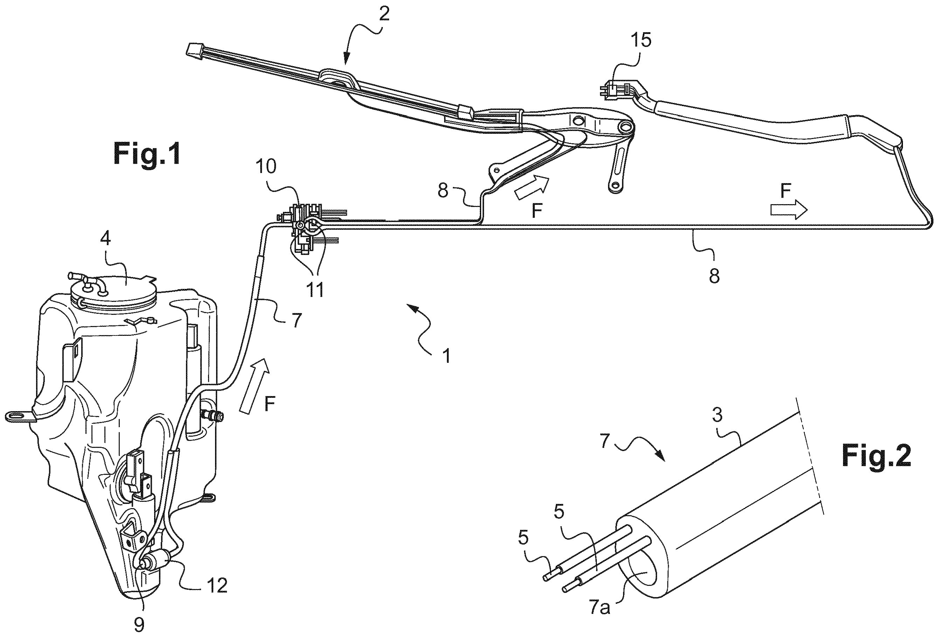

La figure 1 représente une vue schématique générale des éléments d'un dispositif de distribution de liquide lave-glace 1 pour balais d'essuie-glace 2 de véhicule automobile (un seul balai est représenté sur la figure 1).

Le dispositif de distribution de liquide lave-glace 1 représenté est adapté pour des balais d'essuie-glace à deux rampes d'arrosage (aussi appelé dispositif de distribution bi rampe) ou pour des balais d'essuie-glace à une seule rampe d'arrosage (ou dispositif de distribution mono rampe). Les balais d'essuie-glace à deux rampes présentent une rampe d'arrosage de chaque côté du bras du balai d'essuie-glace, chaque rampe s'étendant selon la direction longitudinale du balai. Le liquide lave-glace est ainsi envoyé uniquement sur la partie «avant» du balai, c'est-à-dire que le liquide lave-glace est envoyé sur la rampe d'arrosage située du côté duquel le bras du balai d'essuie-glace avance, pendant une phase montante du balayage et de l'autre côté pendant la phase descendante du balayage. Cet agencement permet d'essuyer instantanément le liquide lave-glace après son dépôt sur la surface vitrée, supprimant ainsi tout intervalle durant lequel la vision du conducteur aurait pu être réduite tout en gardant avantageusement la performance de lavage / nettoyage nécessaire.

Le dispositif de distribution de liquide lave-glace 1 comporte une conduite hydraulique principale 7, deux conduites hydrauliques secondaires 8 et au moins un raccord hydraulique 9, 10, 11, 15.

Comme on peut le voir sur un exemple de réalisation représenté en figure 2, la conduite hydraulique principale 7 comporte un manchon 3 dans lequel au moins un canal de circulation 7a est ménagé pour la circulation du liquide lave-glace. Le manchon 3 est en matériau souple, par exemple en caoutchouc. Le canal de circulation 7a est raccordé à une pompe de liquide lave-glace 12 du véhicule automobile, la pompe 12 étant elle-même raccordée à un réservoir 4 (figure 1).

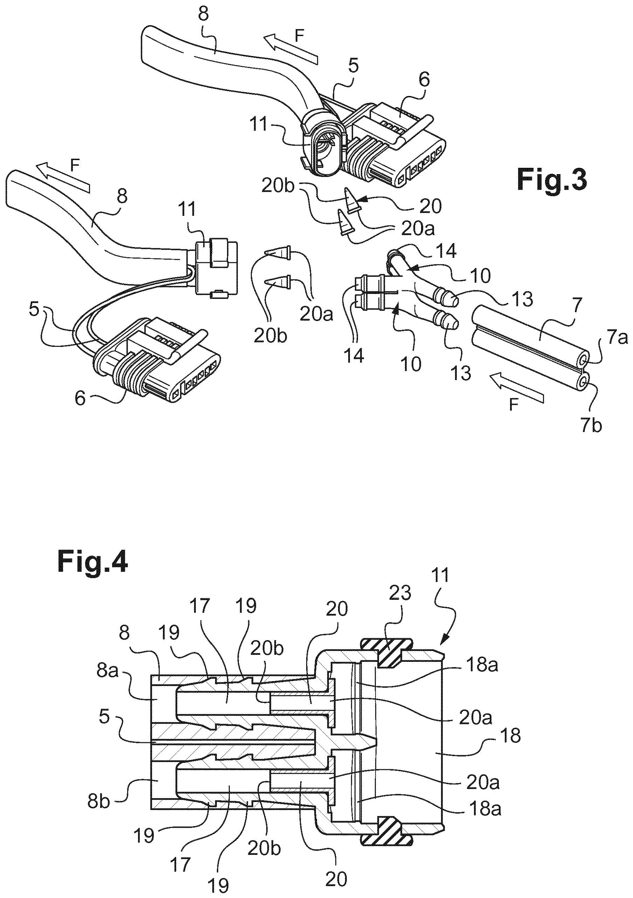

Dans le mode de réalisation bi-rampe, la conduite hydraulique principale 7 comporte deux canaux de circulation 7a, 7b (figures 1 et 3).

Les conduites hydrauliques secondaires 8 sont de même principe (voir par exemple la vue en coupe de la figure 4). Elles présentent respectivement au moins un canal de circulation 8a, 8b et sont destinées à être raccordées à un balai d'essuie-glace 2 respectif.

En fonctionnement, le liquide lave-glace circule depuis le réservoir 4 vers les balais d'essuie-glace 2 selon les flèches F représentées sur la figure 1.

Selon un mode de réalisation particulier dit « chauffant », la conduite hydraulique principale 7 et/ou les conduites hydrauliques secondaires 8, comporte également au moins un conducteur chauffant 5, par exemple noyé dans la masse du manchon 3 (figure 2). Le conducteur chauffant 5 est par exemple introduit lors de l'extrusion du manchon 3. Le conducteur chauffant 5 est un fil résistif qui réchauffe le manchon 3 et ainsi, réchauffe le liquide lave-glace circulant dans le canal de circulation. Le liquide lave-glace est ainsi réchauffé lorsque la température extérieure est trop basse de manière à ce qu'il n'y ait pas d'obstacles à l'écoulement du liquide lave-glace dans le canal de circulation.

Les conducteurs chauffants 5 des conduites hydrauliques secondaires 8 sont raccordés à un connecteur électrique 6 pour être alimentés et pour être facilement déconnectés/connectés (figure 3).

Dans le mode de réalisation bi-rampe, les conducteurs chauffants 5 s'étendent dans le manchon 3 de la conduite hydraulique principale 7 et/ou secondaire 8 par exemple en passant entre les deux canaux de circulation (figure 4).

Parmi les raccords hydrauliques du dispositif de distribution 1, on distingue notamment le raccord de dérivation 10, l'adaptateur 11, le raccord mâle à liquide 15 et le connecteur de pompe 9.

Le raccord de dérivation 10 permet de raccorder au moins un canal de circulation 7a, 7b de la conduite hydraulique principale 7 à au moins deux canaux de circulation 8a, 8b d'une conduite hydraulique secondaire 8 respective, comme représenté sur l'exemple de la figure 3.

Le raccord de dérivation 10 est par exemple un élément tubulaire en « T » ou en « Y » permettant la dérivation du liquide lave-glace depuis la conduite hydraulique principale 7 vers les deux conduites hydrauliques secondaires 8. Plus précisément, le raccord de dérivation 10 comporte en entrée, une canule 13 raccordée à un canal de circulation 7a de la conduite hydraulique principale 7 et en sortie, deux canules 14 respectivement raccordées à un canal de circulation 8a d'une conduite hydraulique secondaire 8.

Les canules 13, 14 présentent par exemple des portions tubulaires mâles pourvues d'au moins une denture annulaire tronconique permettant l'insertion et le maintien dans le canal de circulation respectif du manchon 3 par déformation.

Dans le mode de réalisation bi-rampe, le dispositif de distribution comporte deux raccords de dérivation 10, par exemple superposés l'un en dessus de l'autre de manière que les canules 13, 14 soient sensiblement parallèles entre elles. Les deux raccords de dérivation 10 sont indépendants l'un de l'autre mais peuvent être d'un seul tenant (figure 1) ou distincts.

La conduite hydraulique principale 7 et le(s) raccord(s) de dérivation 10 sont disposés sous le capot du véhicule automobile, c'est-à-dire dans le compartiment moteur, tandis que les conduites hydrauliques secondaires 8 sont principalement agencées à l'extérieur.

Un autre type de raccord hydraulique est l'adaptateur 11. Les adaptateurs 11 permettent de faciliter le raccordement d'au moins un raccord de dérivation 10 avec au moins un canal de circulation 8a, 8b d'une conduite hydraulique secondaire 8 (figures 3 et 4).

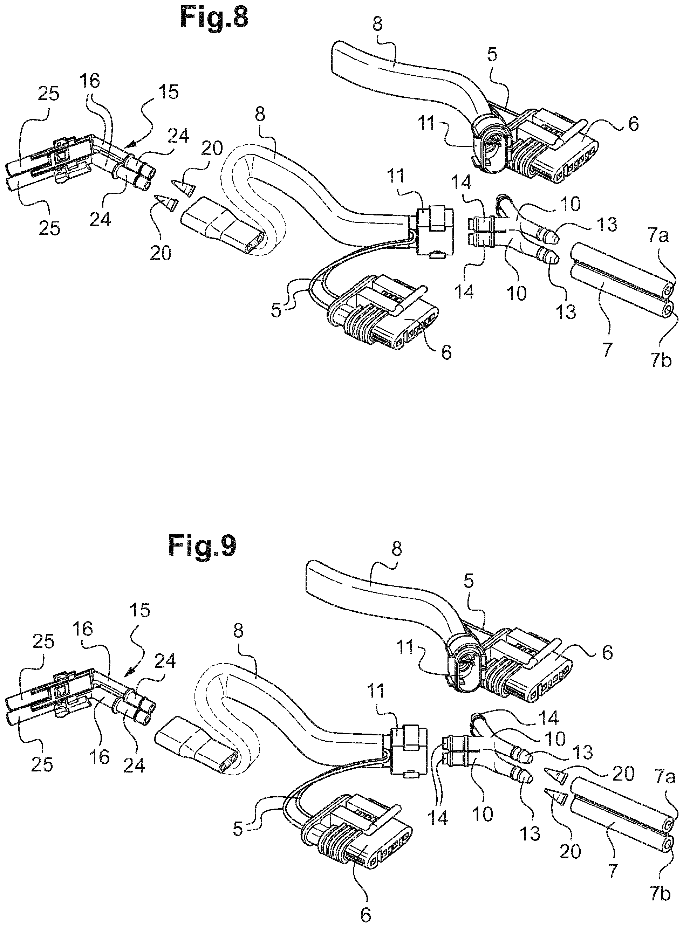

Un autre type de raccord hydraulique est le raccord mâle 15 (figures 8 et 9). Le raccord mâle 15 permet de raccorder au moins un canal de circulation 8a, 8b d'une conduite hydraulique secondaire 8 à un balai d'essuie-glace 2.

Un autre type de raccord hydraulique est le connecteur de pompe 9 (figure 1).

Le dispositif de distribution comporte également au moins un clapet anti-retour 20, distinct, reçu dans un canal de circulation 7a, 7b, 8a, 8b d'une conduite hydraulique principale 7 ou secondaire 8, ou dans un raccord hydraulique 9, 10, 11, 15. Ainsi, le raccordement hydraulique est simplifié et est rendu plus compact.

Le clapet anti-retour 20 permet le passage du liquide lave-glace pompé dans le sens de circulation allant de la pompe de liquide lave-glace 12 vers une rampe d'arrosage du balai et le blocage du retour du flux de liquide pompé dans l'autre sens, c'est-à-dire des balais 2 vers la pompe 12. Le clapet anti-retour 20 évite ainsi toute redescente de liquide vers la pompe 12, notamment en phase d'arrêt de distribution de liquide dans un canal de circulation.

Selon un premier mode de réalisation représenté sur les figures 3 et 4, le clapet anti-retour 20 est inséré dans une canule 17 de l'adaptateur 11.

Mieux visible sur la vue en coupe de la figure 4, l'adaptateur 11 comporte en sortie au moins une canule 17 conformée pour s'insérer dans un canal de circulation 8a, 8b d'une conduite hydraulique secondaire 8, et un logement d'entrée 18 coopérant avec une canule 14 de raccord de dérivation 10. Par exemple, le logement d'entrée 18 comporte au moins une cavité 18a conformée pour coopérer par emboîtage élastique avec la canule 14 du raccord de dérivation 10.

La canule 17 de l'adaptateur 11 présente une section interne de forme tubulaire et peut présenter des nervures radiales 19 en périphérie extérieure pour faciliter son insertion et son maintien dans le canal de circulation 8a, 8b par déformation du manchon 3.

L'adaptateur 11 peut comporter en outre un moyen de verrouillage du raccordement par exemple formé par un clip 23 s'emboîtant autour des parois extérieures du logement d'entrée18.

L'adaptateur 11 améliore ainsi l'étanchéité du raccordement entre le raccord de dérivation 10 et les conduites hydrauliques secondaires 8, et fournit un retour sensitif perceptible par l'opérateur lui garantissant un montage correct.

Le clapet anti-retour 20 est par exemple monté en force dans la canule 17. Le liquide lave-glace est ainsi forcé de passer au travers du clapet anti-retour 20 au niveau de l'adaptateur 11 pour continuer à circuler.

Dans le mode de réalisation bi-rampe, le dispositif de distribution comporte ainsi quatre clapets anti-retour 20, chaque clapet anti-retour 20 étant reçu dans une canule 17 d'un adaptateur 11. Etant donné qu'un clapet anti-retour 20 est reçu dans chaque canule 17 de l'adaptateur de chaque conduite hydraulique secondaire 8, on est assuré que le liquide lave-glace ne remonte pas des conduites hydrauliques secondaires 8 lors d'un arrêt de distribution du liquide.

Les clapets anti-retour 20 sont par exemple du type « bec de canard » (ou « duckbill » en anglais). Les clapets anti-retour 20 de type bec de canard présentent un corps de clapet présentant une extrémité cylindrique 20a conformée au canal de circulation 8a, 8b pour s'assurer que le liquide lave-glace soit forcé de passer au travers du clapet anti-retour 20, et une extrémité de forme aplatie en bec de canard 20b.

L'extrémité en bec de canard 20b est orientée en aval dans le sens d'écoulement du liquide lave-glace allant de la pompe 12 vers les balais 2 (voir flèches F sur la figure 1). Quand le liquide lave-glace est pompé à travers le clapet anti-retour 20, l'extrémité aplatie en bec de canard 20b s'ouvre pour permettre au liquide lave-glace de passer. Lorsque le liquide lave-glace n'est plus pompé, la pression s'abaisse et l'extrémité en bec de canard 20b reprend sa forme aplatie prévenant le retour du liquide lave-glace pompé vers la pompe.

Les clapets anti-retour 20 sont par exemple en matériau élastomère.

Ce type de clapet anti-retour présente l'avantage d'être simple, robuste, facile à agencer et à réchauffer.

Dans le mode de réalisation chauffant, en fonctionnement, les conducteurs chauffants 5 chauffent le manchon qui chauffe à son tour les canules 17 des adaptateurs 11 insérés dans les canaux de circulation 8a, 8b. Les clapets anti-retour 20 sont alors réchauffés par les adaptateurs 11 sans qu'il n'y ait besoin de dispositif de chauffe supplémentaire. Les clapets anti-retour 20 bénéficient ainsi de la proximité des conducteurs chauffants 5 pour être réchauffés.

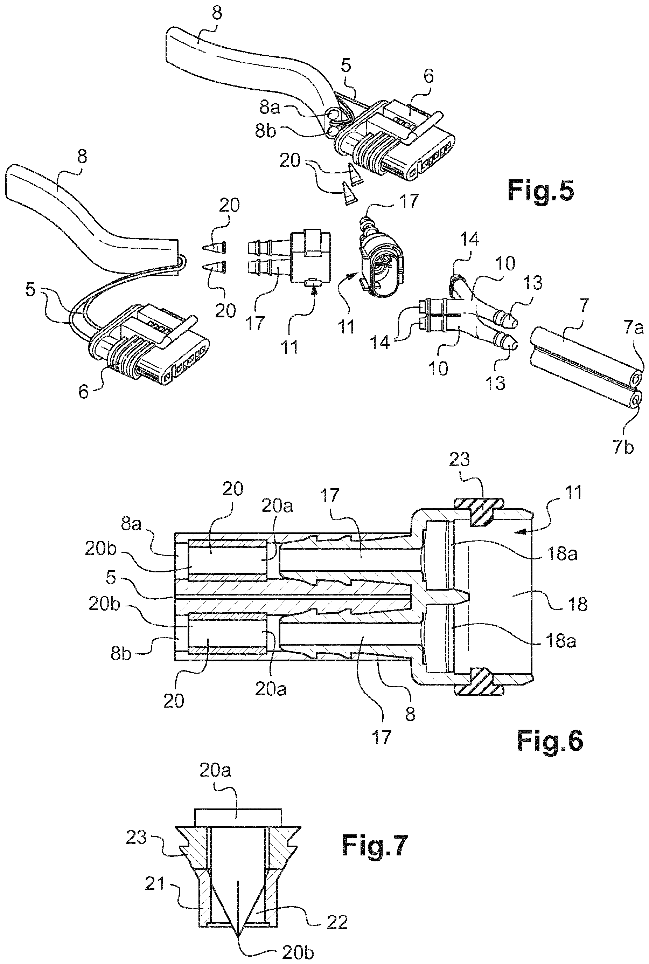

Selon un deuxième mode de réalisation représenté sur les figures 5 et 6, les clapets anti-retour 20 sont directement reçus dans le canal de circulation 8a, 8b des conduites hydrauliques secondaires 8.

Dans ce premier exemple, le clapet anti-retour 20 est inséré à l'entrée du canal de circulation 8a, 8b de la conduite hydraulique secondaire 8, du côté destiné à être raccordé à un raccord de dérivation 10, en aval de ce dernier.

Le clapet anti-retour 20 est entièrement logé dans le canal de circulation 8a, 8b de la conduite hydraulique secondaire 8 de sorte que le liquide lave-glace soit forcé de passer au travers pour continuer de circuler.

Dans le mode de réalisation bi-rampe, le dispositif de distribution comporte ainsi quatre clapets anti-retour, chaque clapet anti-retour étant reçu dans un canal de circulation 8a, 8b respectif. Ainsi, on est assuré que le liquide lave-glace ne remonte pas des conduites hydrauliques secondaires 8 lors d'un arrêt de distribution du liquide.

Le clapet anti-retour 20 est par exemple monté en force dans le canal de circulation 8a, 8b. Comme précédemment, les clapets anti-retour 20 sont par exemple du type bec de canard.

Le dispositif de distribution peut également comporter un organe de blocage 21 coopérant avec le canal de circulation 8a, 8b et le clapet anti-retour 20 pour bloquer le déplacement du clapet anti-retour 20 dans le canal de circulation 8a, 8b.

Selon un exemple de réalisation représenté en figure 7, l'organe de blocage 21 présente un logement interne 22 pour recevoir le clapet anti-retour 20 et des dents de blocage annulaire 23 en périphérie externe. Les dents de blocage 23 permettent de faciliter l'enfoncement et le maintien du clapet anti-retour 20 dans le canal de circulation 8a, 8b. En plus d'assurer son blocage en déplacement dans le tuyau, l'organe de blocage 21 facilite le montage du clapet anti-retour 20 dans le canal de circulation 8a, 8b.

L'organe de blocage 21 est par exemple réalisé d'une seule pièce en matériau plastique. Dans le mode de réalisation chauffant, l'organe de blocage 21 est par exemple en matériau thermoconducteur. En fonctionnement, les conducteurs chauffants 5 de la conduite hydraulique secondaire 8 réchauffent le manchon 3 qui chauffe à son tour l'organe de blocage 21 et les clapets anti-retour 20 sans qu'il y ait besoin de dispositif de chauffage supplémentaire. Les clapets anti-retour 20 bénéficient ainsi de la proximité des conducteurs chauffants 5 pour être eux-mêmes réchauffés.

Selon un autre mode de réalisation non représenté, l'organe de blocage est d'un seul tenant avec le clapet anti-retour 20. Selon d'autres formes de réalisation, l'organe de blocage comporte une contrepièce ou une butée montée dans le canal de circulation 8a, 8b pour assurer le blocage en déplacement du clapet anti-retour 20 dans le canal de circulation.

Selon un deuxième exemple de réalisation, le clapet anti-retour 20 est inséré à la sortie du canal de circulation 8a, 8b de la conduite hydraulique secondaire 8, en amont de l'extrémité de la conduite hydraulique secondaire 8 destinée à être raccordée au raccord mâle 15 (figure 8).

Comme dans l'exemple précédent, on est assuré que le liquide lave-glace ne remonte pas des conduites hydrauliques secondaires 8 lors d'un arrêt de distribution du liquide.

. De plus, dans cet exemple de réalisation, les clapets anti-retour 20 sont montés plus près des balais d'essuie-glace. Les canaux de circulation 8a, 8b des conduites hydrauliques secondaires 8 comportent donc du liquide lave-glace jusqu'aux clapets anti-retour 20 et donc au plus proche des balais d'essuie-glace 2. Il en résulte un gain de temps pour la projection du liquide lave-glace sur le parebrise du véhicule automobile.

Le clapet anti-retour 20 est par exemple monté en force dans le canal de circulation 8a, 8b. Ils sont par exemple du type bec de canard et un organe de blocage 21 peut coopérer avec le canal de circulation 8a, 8b pour retenir le clapet anti-retour 20.

Par ailleurs, dans le mode de réalisation chauffant, les conducteurs chauffants 5 de la conduite hydraulique secondaire 8 réchauffent le manchon 3 qui chauffe à son tour les clapets anti-retour 20 logés dans les canaux de circulation 8a, 8b.

Selon un troisième exemple de réalisation représenté sur la figure 9, le clapet anti-retour 20 est inséré à la sortie du canal de circulation 7a, 7b de la conduite hydraulique principale 7, du côté destiné à être raccordé au raccord de dérivation 10.

Le clapet anti-retour 20 est par exemple monté en force dans le canal de circulation 7a, 7b. Il est par exemple du type bec de canard et un organe de blocage 21 peut coopérer avec le canal de circulation 7a, 7b pour retenir le clapet anti-retour 20.

Dans le mode de réalisation chauffant, les conducteurs chauffants 5 de la conduite hydraulique principale 7 réchauffent le manchon 3 qui chauffe à son tour directement les clapets anti-retour 20 logés dans les canaux de circulation 7a, 7b.

Cette solution utilise des clapets anti-retour de plus grande section de passage que celles des clapets anti-retour reçus dans les canaux de circulation 8a, 8b des conduites hydrauliques secondaires 8. En effet, la conduite hydraulique principale 7 présente des canaux de circulation 7a, 7b ayant des sections de diamètre plus important que celles des canaux de circulation 8a, 8b des conduites hydrauliques secondaires 8.

Selon un troisième exemple de réalisation (figure 8), le clapet anti-retour 20 est inséré à l'entrée 24 d'une canule 16 d'un raccord mâle 15.

Le raccord mâle 15 comporte au moins une canule 16 pour la circulation du liquide lave-glace, dont l'entrée 24 est insérée dans un canal de circulation 8a, 8b d'une conduite hydraulique secondaire 8 et la sortie 25 est insérée dans un raccord femelle à liquide complémentaire du balai d'essuie-glace. La canule 16 peut être coudée.

Dans le mode de réalisation chauffant, le raccord mâle 15 peut être réchauffé, par exemple par les conducteurs chauffants 5 s'étendant hors du manchon des conduites hydrauliques secondaires 8.

Le clapet anti-retour 20 est par exemple monté en force dans la canule 16. Le liquide lave-glace est ainsi forcé de passer au travers du clapet anti-retour 20 au niveau du raccord mâle 15 pour continuer à circuler.

Dans le mode de réalisation bi-rampe, le dispositif de distribution comporte ainsi quatre clapets anti-retour 20, chaque clapet anti-retour 20 étant reçu dans une canule 16 respective d'un raccord mâle 15.

Dans ce mode de réalisation, les clapets anti-retour 20 sont montés au plus près des balais d'essuie-glace, ce qui réduit le temps pour la projection du liquide lave-glace sur le parebrise du véhicule automobile. En outre, un clapet anti-retour 20 peut également être reçu dans le canal de circulation 8a, 8b de chaque conduite hydraulique secondaire 8, assurant que le liquide lave-glace ne remonte pas d'une conduite hydraulique secondaire 8 à l'autre.

## Revendications

1. Dispositif de distribution de liquide lave-glace pour balais d'essuie-glace de véhicule automobile comportant :
- une conduite hydraulique (7, 8) présentant au moins un canal de circulation (7a, 7b, 8a, 8b) de liquide,
- au moins un raccord hydraulique (9, 10, 11, 15) assurant l'acheminement de liquide à ladite conduite ou l'évacuation du liquide de ladite conduite,
- au moins un clapet anti-retour (20),
le dispositif de distribution étant **caractérisé en ce que** l'au moins un clapet anti-retour (20) est
inséré dans une canule (17) d'un adaptateur (11), ladite canule (17) étant insérée dans un canal de circulation (8a 8b) de la conduite hydraulique secondaire (8), ledit adaptateur (11) formant un raccord hydraulique pour le raccordement d'au moins un raccord de dérivation (10) avec un canal de circulation (8a, 8b) d'une conduite hydraulique secondaire (8)
ou
inséré à l'entrée d'une canule (16) d'un raccord mâle (15), ladite entrée de canule (16) étant insérée dans un canal de circulation (8a, 8b) de la conduite hydraulique secondaire (8), le raccord mâle (15) formant un raccord hydraulique pour le raccordement d'un balai d'essuie-glace (2) avec au moins un canal de circulation (8a, 8b) d'une conduite hydraulique secondaire (8).

2. Dispositif de distribution selon la revendication 1, **caractérisé en ce qu'**il comporte :
- une conduite hydraulique principale (7) présentant au moins un canal de circulation (7a, 7b),
- deux conduites hydrauliques secondaires (8) présentant respectivement au moins un canal de circulation (8a, 8b), et
- au moins un raccord hydraulique (9, 10, 11, 15) pour raccorder les canaux de circulation desdits conduites hydrauliques.

3. Dispositif de distribution selon la revendication 2, **caractérisé en ce que** ladite conduite hydraulique principale (7) est raccordée à une pompe de liquide lave-glace du véhicule automobile, et lesdites conduites hydrauliques secondaires (8) sont raccordées à un balai d'essuie-glace respectif.

4. Dispositif de distribution selon l'une quelconque des revendications précédentes, **caractérisé en ce que** les clapets anti-retour (20) sont de type « bec de canard ».

5. Dispositif de distribution selon l'une quelconque des revendications précédentes, **caractérisé en ce que** le clapet anti-retour (20) est monté en force dans le canal de circulation (7a, 7b, 8a, 8b) ou dans une canule (16, 17) du raccord hydraulique (11, 15).

6. Dispositif de distribution selon l'une quelconque des revendications 2 à 5, **caractérisé en ce que** la conduite hydraulique principale (7) et/ou les conduites hydrauliques secondaires (8) comportent des conducteurs chauffants (5).

7. Dispositif de distribution selon l'une quelconque des revendications 2 à 6, **caractérisé en ce que** les conduites hydraulique principale (7) et secondaires (8) comportent respectivement deux canaux de circulation (7a, 7b, 8a, 8b) de liquide.

8. Dispositif de distribution selon les revendications 6 et 7, **caractérisé en ce que** les conducteurs chauffants (5) s'étendent dans le manchon de la conduite hydraulique principale ou secondaire en passant entre les deux canaux de circulation (7a, 7b, 8a, 8b).

## Patentansprüche

1. Verteilungsvorrichtung für Scheibenwaschflüssigkeit für Kraftfahrzeug-Scheibenwischerblätter, die umfasst:
- eine Hydraulikleitung (7, 8), die mindestens einen Flüssigkeitszirkulationskanal (7a, 7b, 8a, 8b) aufweist,
- mindestens einen Hydraulikanschluss (9, 10, 11, 15), der das Transportieren von Flüssigkeit zu der Leitung oder das Ableiten der Flüssigkeit aus der Leitung sicherstellt,
- mindestens eine Rückschlagklappe (20),
wobei die Verteilungsvorrichtung **dadurch gekennzeichnet ist, dass** die mindestens eine Rückschlagklappe (20) in eine Kanüle (17) eines Adapters (11) eingefügt ist, wobei die Kanüle (17) in einen Zirkulationskanal (8a, 8b) der Sekundärhydraulikleitung (8) eingefügt ist, wobei der Adapter (11) einen Hydraulikanschluss für das Anschließen mindestens eines Abzweiganschlusses (10) an einen Zirkulationskanal (8a, 8b) einer Sekundärhydraulikleitung (8) bildet,
oder
am Eingang einer Kanüle (16) eines Steckanschlusses (15) eingefügt ist, wobei der Kanüleneingang (16) in einen Zirkulationskanal (8a, 8b) der Sekundärhydraulikleitung (8) eingefügt ist, wobei der Steckanschluss (15) einen Hydraulikanschluss für das Anschließen eines Scheibenwischerblatts (2) mit mindestens einem Zirkulationskanal (8a, 8b) einer Sekundärhydraulikleitung (8) bildet.

2. Verteilungsvorrichtung nach Anspruch 1, **dadurch gekennzeichnet, dass** sie umfasst:
- eine Haupthydraulikleitung (7), die mindestens einen Zirkulationskanal (7a, 7b) aufweist,
- zwei Sekundärhydraulikleitungen (8), die jeweils mindestens einen Zirkulationskanal (8a, 8b) aufweisen, und
- mindestens einen Hydraulikanschluss (9, 10, 11, 15) zum Anschließen der Zirkulationskanäle der Hydraulikleitungen.

3. Verteilungsvorrichtung nach Anspruch 2, **dadurch gekennzeichnet, dass** die Haupthydraulikleitung (7) an eine Scheibenwaschflüssigkeitspumpe des Kraftfahrzeugs angeschlossen ist, und die Sekundärhydraulikleitungen (8) an ein jeweiliges Scheibenwischerblatt angeschlossen sind.

4. Verteilungsvorrichtung nach einem der vorstehenden Ansprüche, **dadurch gekennzeichnet, dass** die Rückschlagklappen (20) vom Typ "Entenschnabel" sind.

5. Verteilungsvorrichtung nach einem der vorstehenden Ansprüche, **dadurch gekennzeichnet, dass** die Rückschlagklappe (20) unter Kraftanwendung in den Zirkulationskanal (7a, 7b, 8a, 8b) oder in eine Kanüle (16, 17) des Hydraulikanschlusses (11, 15) montiert ist.

6. Verteilungsvorrichtung nach einem der Ansprüche 2 bis 5, **dadurch gekennzeichnet, dass** die Haupthydraulikleitung (7) und/oder die Sekundärhydraulikleitungen (8) Heizleiter (5) umfassen.

7. Verteilungsvorrichtung nach einem der Ansprüche 2 bis 6, **dadurch gekennzeichnet, dass** die Haupthydraulikleitung (7) und die Sekundärhydraulikleitungen (8) jeweils zwei Flüssigkeitszirkulationskanäle (7a, 7b, 8a, 8b) umfassen.

8. Verteilungsvorrichtung nach einem der Ansprüche 6 und 7, **dadurch gekennzeichnet, dass** sich die Heizleiter (5) in den Stutzen der Haupt- oder Sekundärhydraulikleitung erstrecken, indem sie zwischen den zwei Zirkulationskanälen (7a, 7b, 8a, 8b) durchgehen.

## Claims

1. A windshield-washing liquid distribution device for motor vehicle windshield wipers, including:
- a hydraulic pipe (7, 8) including at least one liquid circulation channel (7a, 7b, 8a, 8b),
- at least one hydraulic connector (9, 10, 11, 15) for feeding liquid to said pipe or evacuating liquid from said pipe,
- at least one check valve (20),
the distribution device being **characterized in that** the at least one check valve (20) is is inserted in a barb (17) of an adapter (11), said barb (17) being inserted in a circulation channel (8a, 8b) of the secondary hydraulic pipe (8), said adapter (11) forming a hydraulic connector for the connection of at least one branch connector (10) with a circulation channel (8a, 8b) of a secondary hydraulic pipe (8)
or
inserted at the inlet of a barb (16) of a male connector (15), said inlet of the barb (16) being inserted in a circulation channel (8a, 8b) of the secondary hydraulic pipe (8), the male connector (15) forming a hydraulic connector for the connection of a windshield wiper (2) with at least one circulation channel (8a, 8b) of a secondary hydraulic pipe (8).

2. The distribution device as claimed in claim 1, **characterized in that** it includes:
- a main hydraulic pipe (7) including at least one circulation channel (7a, 7b),
- two secondary hydraulic pipes (8) respectively including at least one circulation channel (8a, 8b), and
- at least one hydraulic connector (9, 10, 11, 15) for connecting the circulation channels of said hydraulic pipes.

3. The distribution device as claimed in claim 2, **characterized in that** said main hydraulic pipe (7) is connected to a windshield-washing liquid pump of the motor vehicle and said secondary hydraulic pipes (8) are connected to a respective windshield wiper.

4. The distribution device as claimed in any one of the preceding claims, **characterized in that** the check valves (20) are of "duckbill" type.

5. The distribution device as claimed in any one of the preceding claims, **characterized in that** the check valve (20) is a force-fit in the circulation channel (7a, 7b, 8a, 8b) or in a barb (16, 17) of the hydraulic connector (11, 15).

6. The distribution device as claimed in any one of claims 2 to 5, **characterized in that** the main hydraulic pipe (7) and/or the secondary hydraulic pipes (8) include heating conductors (5).

7. The distribution device as claimed in any one of claims 2 to 6, **characterized in that** the main hydraulic pipe (7) and the secondary hydraulic pipes (8) respectively include two liquid circulation channels (7a, 7b, 8a, 8b).

8. The distribution device as claimed in claims 6 and 7, **characterized in that** the heating conductors (5) extend in the sleeve of the main or secondary hydraulic pipe(s) and pass between the two circulation channels (7a, 7b, 8a, 8b).
